# EUROPEAN PATENT SPECIFICATION

(11) **EP 1 078 408 B1**
(45) Date of publication and mention of the grant of the patent: **27.03.2002**
(21) Application number: 99918146.4
(22) Date of filing: 22.04.1999
(51) Int. Cl.: H01M 8/02, H01M 8/22

(54) **FUEL CELL FLOW-FIELD STRUCTURE FORMED BY LAYER DEPOSITION**
DURCH ABSCHEIDUNG VON SCHICHTEN GEBILDETE GASVERTEILERSTRUKTUR FÜR BRENNSTOFFZELLEN
STRUCTURE DE CHAMP D'ECOULEMENT DE PILE A COMBUSTIBLE FORMEE PAR DEPOT DE COUCHES

(30) Priority: 23.04.1998 GB 9808524
(43) Date of publication of application: 28.02.2001
(73) Proprietor: BALLARD POWER SYSTEMS INC., Burnaby, British Columbia V5J 5J9 (CA)
(72) Inventor: DONG, Zoumin, Victoria, British Columbia V8X 4H9 (CA)
(74) Representative: Powell, Stephen David
(86) International application number: GB9901239
(87) International publication number: WO9956333

(56) References cited:
- EP-A- 0 406 523
- WO-A-97/21256
- US-A- 4 459 342
- US-A- 5 300 370
- US-A- 5 531 956
- US-A- 5 798 188

## Description

### FIELD OF THE INVENTION

The present invention relates to a method of manufacture of electrochemical fuel cell strata or plates in which are formed flow-field channels, and to the plates thus manufactured.

### BACKGROUND

Electrochemical fuel cells convert fuel and oxidant to electricity and reaction product. In electrochemical fuel cells employing hydrogen as the fuel and oxygen as the oxidant, the reaction product is water. Solid polymer fuel cells generally include a membrane electrode assembly, ("MEA") comprising a solid polymer electrolyte or ion exchange membrane disposed between two electrode layers. The electrode layers typically comprise porous, electrically conductive sheet material and an electrocatalyst at each membrane-electrode interface to promote the desired electrochemical reaction.

At the anode, the fuel (typically hydrogen) moves through the porous electrode material and is oxidized at the anode electrocatalyst to form cations, which migrate through the membrane to the cathode. At the cathode, the oxidizing gas (typically air containing oxygen) moves through the porous electrode material and is reduced at the cathode electrocatalyst to form a reaction product.

In conventional fuel cells, the MEA is interposed between two substantially fluid-impermeable, electrically conductive plates, commonly referred to as separator plates. The plates serve as current collectors, provide structural support for the electrode layers, typically provide means for directing the fuel and oxidant to the anode and cathode layers, respectively, and typically provide means for removing products, such as water, formed during operation of the fuel cell. When reactant channels are formed in the separator plates, the plates are sometimes referred to as fluid flow field plates.

Fuel cell stacks are well known, comprising an aligned assembly of fuel cells connected together electrically in series to obtain desired voltage and power output. An early example of a fuel cell stack is illustrated in Maru U.S. Patent No. 4,444,851 granted 24 April 1984; a later example is illustrated in Washington U.S. Patent No. 5,514,487 granted 7 May 1996. Typically, in any such stack, one side of a given fluid flow field plate (separator plate) is the anode plate for one cell, and the other side of the plate is the cathode plate for the adjacent cell, and so on *seriatim*. For this reason, the plates are sometimes referred to as bipolar plates.

Fluid reactant streams are typically supplied to the fuel cell electrodes via channels in the flow field plates communicating with external plenum chambers or manifolds connected to the sides of the stack, or communicating with internal plenum chambers or manifolds formed by aligning openings formed within the plates and MEAs in the stack. Internal manifolds have been almost universally used in preference to external manifolds for proton exchange membrane (PEM) fuel cell stacks; external manifolds are more commonly found in high-temperature fuel cell stacks such as phosphoric acid fuel cell stacks. Similarly, fluid stream exhaust conduits or manifolds may be external or internal. Typically the stack also has coolant passageways extending within it for circulating a coolant fluid to absorb heat generated by the exothermic fuel cell reaction.

The requisite flow-field channels in a fuel cell separator plate may be formed as a pattern of parallel open-faced fluid-flow channels formed in a major surface of a rigid, electrically conductive plate. The parallel channels extend between an inlet manifold opening and an outlet manifold opening formed in the plate. Watkins U.S. Patents Nos. 4,988,583 and 5,108,849 issued January 29, 1991 and April 28, 1992, respectively, describe fluid-flow-field plates in which continuous open-faced fluid-flow channels formed in the surface of the plate traverse the central area of the plate surface in a plurality of passes, that is, in a serpentine manner, between an inlet manifold opening and an outlet manifold opening formed in the plate. Fluid-flow-field plates for electrochemical fuel cells in which the inlet and outlet flow channels are mutually disconnected, so that in operation the reactant stream must pass through the porous electrode layer to get from the inlet to the outlet, have also been described.

Conventional fuel cell flow-field plates, which have open-faced channels or grooves formed therein, are conventionally fabricated by:
(a) removing material from a pre-formed plate-like structure, e.g. by milling or die cutting;
(b) displacing material in a preformed plate-like structure, e.g. by embossing or stamping; or
(c) molding in a cast.

Approach (a) results in material wastage with concomitant increased raw material costs. Milling or engraving is costly due to the precision machining required, and can lead to reduced plate integrity and strength. This manufacturing option typically imposes limits on the minimum achievable cell thickness for acceptable plate permeability and mechanical properties, as the machining process can cause cracks and defects in the plate.

A limited number of materials are suited to flow-field fabrication by embossing or stamping. Compressible, electrically conductive materials that can be embossed, such as expanded graphite foil, tend to have physical properties such as porosity and fluid permeability, that can be disadvantageous in fuel cells. Flow channels can be stamped in malleable sheet metals, but again metals are typically not preferred materials for use in fuel cells. For example, corrosion and leaching of ions can damage the ion exchange membrane and/or the electrocatalyst in solid polymer fuel cells. Also, if the sheet material is stamped, the reverse side of the plate will normally have the mirror-image design formed on it, which limits the pattern options for double-sided flow field plates.

For molding, composite materials are typically used, wherein a particulate filler imparts electrical conductivity to a thermoplastic or thermosetting resin. As the relative portion of the filler in the composite material is increased to obtain the desired conductivity, the flow properties of the composite material become less suitable for injection or compression molding. Another limitation is that a cast or model must be prepared, typically by machining, so the feasible structure designs are limited.

Shigeta U.S. Patent No. 4,459,342 granted 10 July 1984 discloses a porous ribbed substrate for a fuel cell electrode that has a ribbed layer and a non-ribbed layer. The ribbed layer is prepared by a pressing process in which raw materials are supplied into a die having a predetermined configuration and are pressed while heating. The flow-field structure itself is non-laminated and is prepared through a conventional machining process.

Ong U.S. Patent No. 5,531,956 granted 2 July 1996 discloses a method for producing a ribbed electrode for a fuel cell including the steps of depositing a suspension of a powdered electrode metal onto the face of a substantially flat porous electrode metal substrate, forming a plurality of raised structures on the face of the electrode, and then sintering the electrode. In one embodiment of the Ong electrode, the electrode substrate is passed through a plurality of flowing streams of the powdered metal suspension, forming a plurality of ribbed or discontinuous pod-like structures on the surface of the electrode substrate. According to another embodiment of the Ong electrode, a perforated plate is positioned on a face of the electrode substrate and the perforations are then filled with the powdered metal suspension. Note that neither of these approaches results in the formation of a flow-field structure consisting of a layered series of material deposits.

A method of fabricating a flow-field plate by laminating a stencil layer (formed by die cutting a sheet material) together with a separator layer is described in Washington U.S. Patent No. 5,300,370 granted 5 April 1994. The separator layer and the stencil layer cooperate to form at least one open-faced reactant channel. The laminated fluid-flow-field structure thus comprises two layers each of which must be properly positioned and aligned, and that are preferably consolidated into a unitary structure. The stencil layer itself is non-laminated and is prepared by means of a conventional machining process. Thus, the flow field design is limited because of the inherent limitations in the manufacture of the stencil layer.

Typically, the flow-field structure on a bipolar plate is made from a single material. For strength and rigidity, if only one material is used, it must be fairly strong and rigid. This choice precludes the use of a separate porous material for the wall of the flow-field channels to better supply reactant and oxidant to the MEA. In addition, prior design approaches are either directly or indirectly influenced by the convenience and cost of machining and manufacturing. If the flow-field structure is made by injection or compression molding, the molds have to be highly accurately milled or else produced by an electric discharge machine. The flow-field design is then constrained by the tool geometry and the capability of the associated machining process. The cost of making each plate is high as the plates must meet high dimensional and geometric (flatness) tolerances to maintain a near-perfect electrical contact across the plate within the fuel cell stack.

Screen printing is commonly used in art work, garment printing and in the preparation of printed circuit boards, and more recently has been used for depositing electrocatalyst layers on fuel cell electrodes. Goller U.S. Patent No. 4,185,131 granted 22 January 1980 discloses the formation of a catalyzed layer for use in a fuel cell electrode by the steps of screen printing an ink suspension onto a porous substrate. Note that Goller discloses unitary broad-area thin-film formation only; Goller does not teach the deposition of material to create structure nor to form a pattern. Frank U.S. Patent No. 4,229,490 granted 21 October 1980 discloses a method of making a fuel cell electrode wherein a thin layer of catalyst material is screen printed onto a thin carbonized paper-like substrate. Multiple printing steps may be employed. Frank's teachings are subject to the same deficiencies as Goller's. Japanese patent specification 5-190184 (Okamoto, assigned to Honda Motor Co.) filed on 10 January 1992 and published on 30 July 1993 discloses a fuel cell wherein an electrocatalyst layer is formed by depositing a paste of catalytic material dispersed in a solution of ion-exchange membrane in a pattern onto an ion-exchange membrane by screen-printing, coating or spraying. Again there is no disclosure in this published specification of the formation of wall structure or the like on a fuel cell plate.

The prior techniques discussed in the preceding paragraph all disclose the deposition of material onto the face of a porous electrode substrate only and do not contemplate screen-printing the ink onto a fluid-impermeable separator plate or onto an ion-exchange membrane. None of these techniques forms three-dimensional structures such as walls or channels on the face of the substrate - they merely form patterns or coatings to establish preferred surface properties, as distinct from forming walls, seals and other topographical elements requiring substantial extent in three dimensions for their efficacy.

### OBJECTS OF THE INVENTION

It is an object of the present invention to provide a relatively low-cost, versatile process for manufacturing fuel cell flow-field plates for use in a fuel cell stack.

Another object of the present invention is to facilitate the economical manufacture of such plates having complex flow-field topographies.

### SUMMARY OF THE INVENTION

In this specification, PEM-type fuel cells will be described by way of example, and the invention has principal application to such PEM-type fuel cells, but may also have application to other types of fuel cells, subject to the demands of other fuel cell designs for strength, dimensional integrity and accuracy, resistance to active chemicals present, compatibility with thermal conditions present in the fuel cell stack, etc.

According to the present invention, a structure such as a flow-field structure for an electrochemical fuel cell is formed by selectively depositing through a stencil or the like a series of layers of material on a substrate in conformity with a selected flow-field wall pattern formed in the stencil. Suitably, the technique is used to form a three-dimensional flow-field wall structure in which spaces between the plate areas on which material is deposited constitute one or more flow channels. In the limiting case, the structure could be formed by depositing a single layer of material on the substrate, but for most situations, a series of layers would be applied in succession in conformity with the pattern to build up the structure. This deposition technique can be used to produce a reactant flow-field pattern in an electrochemical fuel cell plate that may have varying flow channel width, topography and surface characteristics. While reference in this description is frequently made to "flow-field structures", "channel walls" and the like, it must be understood that the deposition technique according to the invention may be used to form any three-dimensional topographical features on a substrate or plate for use in a fuel cell.

The material deposited is typically a suspension of finely divided conductive material. The material is initially a formable liquid, typically with high viscosity, tending to hold its shape once applied to a substrate (or to a previously set layer). It is expected, although not yet tested, that solutions of conductive material may possibly in some cases be substituted for suspensions. The carrier (or solvent) for such conductive material may be chosen to evaporate, or chemically cure or set, but in any case to permit the residue to solidify. In this specification, "cure" and "curing" include all such methods by which the initially liquid formable and depositable material coalesces and is transformed into a solid bonded dimensionally stable and structurally integral topographical unit adhering to the substrate. It is necessary that the conductive material bond to the substrate, and that each successive deposited layer bond to the immediately preceding deposited layer, in order to maintain the structural integrity of the wall pattern. The pattern may be varied for deposition of later-applied layers to form more complex topographies. The deposited material need not invariably be conductive; in some circumstances, non-conductive wall portions or other topographical elements may be desired.

The substrate is preferably a substantially flat, single sheet, or may be laminated sheet material. In one embodiment, the substrate material is a conductive separator plate that is eventually interposed between adjacent fuel cells in a fuel cell stack. The separator plate need not be uniformly conductive but must provide electrical continuity therethrough so as to provide series circuit connections with the electrodes and adjacent fuel cells in the stack. The separator plate must be fluid-impermeable to keep separate fuel, oxidant and/or environment. This can be accomplished either by using a solid impermeable plate, or a lamination of a thin impermeable foil and a deposited layer. Graphite foils, carbon foils and solid graphite plates may also be used as substrates. Flow-field channels are formed by depositing material according to the flow-field wall pattern on one face of the separator plate to form a one-sided flow-field structure, or preferably on both faces of the separator plate to form two flow-field structures, one on each side of the plate. Such plates when installed in the fuel cell stack are stacked alternately with the electrochemically active layers or strata, such as MEA strata.

Because separator plates having flow-field channel walls formed by the deposition technique of the invention are not subjected to rupture-causing stress during the deposition of the walls, the plate can be very thin, the minimum thickness being determined predominantly by the nature of the plate material and the need for the plate to be substantially fluid impermeable. Examples of suitable materials include, but are not limited to, metal foils and sheets, graphite foil, thin carbon resin plates and their combinations. Gold and titanium are examples of suitable metals. A few types of stainless steel such as types 316a, 316b and 3161 are suitable. Of the stainless steels, the type 3161 is relatively economical and corrosion-resistant. However, since almost all commercially available metal sheets contain impurities of various sorts, it is generally desirable to provide inert protective coatings on all metal layers to avoid exposure of the metal to the reactant gas, so as to avoid possible "poisoning" of the fuel cell by the metal. If the substrate is initially smooth, its surface may be roughened before depositing the initially liquid formable material, as by sandblasting. Perfectly inert protective coatings will also allow low-cost, conductive metals such as copper and aluminum to be used as the metal foils.

In another embodiment of a flow-field structure formed on a plate in accordance with the present invention, the substrate is a porous electrically conductive sheet material such as that serving as an interface between the flow field and the catalyst layer in a solid polymer fuel cell. In PEM-type fuel cells, flow-field channels are formed by selectively depositing material on that face of the porous electrically conductive sheet material that faces away from the membrane electrolyte, either before or after fabrication of the MEA strata. Suitable porous electrically conductive sheet materials include carbon fiber paper and carbon cloth.

In a further embodiment of a flow-field structure formed on a substrate for use in a PEM-type fuel cell in accordance with the present invention, the substrate selected is a catalyzed ion-exchange membrane, that is an ion-exchange membrane having a layer comprising an electrocatalyst formed on one or both faces, defining an electrochemically active area, and protected and given structural integrity by outer porous electrode layers bonded to the electocatalytic layers, the porosity of these outer electrode layers affording access of the reactant gases to the electrocatalytic layer. Flow-field channels are formed by selectively depositing material according to the selected flow-field wall pattern on one or both of the catalyzed electrolytic membrane surfaces. It may be advantageous to deposit one or more protective layers of fluid-permeable (porous) material over the entire electrochemically active area in order to protect the catalyst-containing layer, and then to deposit fluid-impermeable (or less porous) material selectively to build up the desired flow-field structure. The term "flow-field plate" and equivalent terms are used herein to include strata using MEA layers as the substrate on which the flow channel walls are deposited, notwithstanding that such MEA layers are usually appreciably less rigid than separator plates.

A preferred method of depositing flow-field channel walls according to the invention is by screen printing an ink formulation onto the substrate. Screen printing, or silk screening, is a well-known printing technique that uses a suitable stencil having an open mesh pattern through which the ink may pass. Ink, comprising a viscous liquid carrier and finely divided particles that after deposition set or bond together to form the channel walls, is applied through a screen made of nylon or silk threads, for example, and is forced through the available open regions of the screen, viz those areas of the stencil in which the pores of the mesh are not blocked by an impenetrable sheet or membrane, thereby to deposit a layer of ink on the substrate, which is placed adjacent and in alignment with the screen so as to accept the deposited ink in the desired wall pattern. The stencil may be either cut manually from a sheet or impenetrable dimensionally stable film or may be produced by photographic techniques, to produce the desired wall and channel pattern design. The stencil may be formed as an impenetrable layer or membrane on the screen.

In printing (deposition), a metered quantity of ink is forced through the entire open mesh surface of the screen. If this step is done by hand, it can be effected with a squeegee, and as the squeegee passes over the open mesh areas, the ink is deposited on the adjacent substrate. In this way, the desired channel wall pattern is transferred to the substrate. A sequence of such printing steps can be undertaken to deposit sequentially a series of layers. More than one screen pattern can be used to deposit different wall structures or portions of the wall structure on the substrate. The layers may be, if desired, printed (deposited) with different inks; for example, for some of the walls or portions thereof, insulating ink material could be used; in other instances, the deposited ink may generate porous walls or portions thereof upon curing. These possibilities will be given further discussion below.

The wall pattern is usually applied in a series of successive ink deposits. Following each application of ink to the substrate or to the immediately preceding solidified deposit, the ink is permitted to dry, and the residual solid particulate material adheres and/or coheres to generate a series of lands defining the walls for the channels formed in the plate. When a plate thus formed is pressed into contact with the adjoining planar plate, the respective patterns of walls mate to form the boundaries of the conduits for gas flow in the fuel cell layers. Alternating levels of such conduits are used to provide fuel and oxidant gases respectively; some of the channels in the plates may be used instead for the provision of coolant.

Various types of ink may be used in the wall deposition process according to the invention, among them water-based ink, long oil alkyd inks, synthetic thin film inks, ultra-thin film inks, vinyl inks, and two-pack catalytic inks. For fast drying, ultra-violet (UV) light-responsive fast-drying ink may be used. The general properties to consider when choosing a screen printing ink are printability and flow, adhesion and drying properties. Ink suitable for use in screen printing fuel cell plates will generally consist of a viscous liquid carrier and conductive ink solids suspended in the carrier. The selection of the liquid carrier depends upon the choice of substrate, drying technique, the volume of each deposited layer, and the character of the suspended ink solids. The ink solids can be conductive particles of different sizes and geometry (powders, flakes and chopped fibers) that work together with the liquid carrier to achieve adequate flow channel wall integrity and plate conductivity. The ink should be relatively viscous to be satisfactory for screen printing purposes; viscosity can be adjusted empirically to suit different manufacturing conditions. Where electrical conductivity is required, the ink preferably comprises an ink solid of graphite/carbon particles and a water-based or polymeric type ink binder. Suitable inks and pastes, for depositing electrically conductive layers preferably include graphite in powder or flake form; chopped carbon fibres also work satisfactorily. Polymers such as tetrafluoroethylene and proton-exchange polymers such as Nafion 117 may impart desirable hydrophobic or ion/proton conducting properties to the flow field. Pore formers may also be a useful component of the ink suspensions especially for the portions of deposited layers that in the assembled fuel cell stack will lie close to the electrochemically active regions of the fuel cell; porosity is necessary for adequate delivery of reactant gases to the electrodes.

The use of the screen-printing technique is thus seen to permit the deposition of different inks on different regions in the plane of the substrate. It may be desirable to have some portions of the flow field hydrophobic, others hydrophilic, some more porous, others less porous, etc. The composition and therefore the properties of the flow-field channel wall structure can also be varied in the dimension perpendicular to the plane of the plate by successively depositing layers of different compositions. The deposited material may form a flow field with varying flow channel width, topography and surface characteristics to achieve the desired flow conditions. In this way, different layers in the deposited layer sequence may have different properties. Thus, for example, the layers that lie closest to the electrochemically active regions of the fuel cell may be selected to be more porous than the more remote layers of the walls, given the desirability that the wall material should facilitate the delivery of oxidant and reactant gases to the electrochemically active areas of the fuel cell, while the absence of porosity in the more remote layers of the walls may impart desired strength and integrity to the deposited walls.

It is possible to print seals, which are generally required around the periphery of the electrochemically active area, and manifold or plenum openings. Sealing may be effected by the use of fluid-impermeable ink material to form, for example, a gasket around the edge of the reactant gas flow-field plate. Suitable sealing materials would generally not be electrically conductive, but would be resilient and fluid impermeable. Thus, in addition to the channel walls, seals and other structural characteristics of the stacked plates could be deposited using this screen-print technique. The printing (deposition) of such resilient, non-conductive, fluid-impermeable layers of course requires a suitable selection of ink material, such as silicon sealant, to be deposited.

For deposition of flow channel walls, alternatives to inks exist; graphite cements such as that sold as Hyper Cast™ Graphite by Hyper Industries of Bonita, California may be screen-printed and solidify upon sintering to form structurally cohesive graphite lands of about 98% or higher carbon content. The Hyper Cast™ Graphite cement is a castable graphite tooling material that performs in a manufacturing environment in a manner very similar to monolithic graphite, but with increased strength. The graphite is in a paste form during the molding or printing process. It will cure through a catalyzing process. The curing takes place in several steps at both ambient temperature and somewhat elevated temperatures (40°C - 110°C). If the material is sintered at a relatively high temperature, around 700°C, few residual organic or inorganic contaminates will be left (leading to a composition of close to 99% carbon). The residual graphite material remains secure at temperatures to 3000°C, and thus can be used for the manufacture of reactant gas flow-field plates in high-temperature fuel cells.

The ink or other material deposition may be effected manually by conventional screen-printing techniques, or screen-printing machines may be used. The production method can be carried out on various scales without substantial modification of the production process. Production may be effected by small batch manual operation, medium-to-large batch automated printing using commercially available screen-printing machines, and mass production in a production line arrangement that typically includes a series of screen-printing stations each immediately followed by a fast-dry station, and terminated at the downstream end by a cleaning station. A number of known screen-printing machines are suitable, including a flatbed hinged frame machine, a flatbed vertical lift machine, a cylinder-bed press and a rotary screen printing machine. The reader may wish to refer to the manuscript John Stephens, *Screen Process Printing* (1987) Blueprint Publishing Ltd. for further information about the technique and machinery used. Screen-printing has a number of advantages, including the fact that it can be effected at ordinary room temperature and pressure, and does not require a special environment. Variation of materials used in different regions of the deposit can be conveniently accomplished by using two or more stencil patterns, so that one type of material is deposited using one stencil, and another type of material is deposited elsewhere using a different stencil.

To speed up the drying of each deposited layer, heaters may be employed, or as mentioned above, special inks such as ultra-violet responsive fast-drying ink that quickly becomes solid under ultra-violet light can be used. Typically the layers shrink substantially from their wet thickness to their dry thickness, although if porosity is induced by chemical or physical treatment of a layer, that treated layer may expand so that its dry thickness is greater than its wet thickness.

Flow-field designs *per se* are beyond the scope of this patent specification, but the design principles of reactant gas flow fields are well documented in the prior literature - see, for example, U.S. Patent No. 5,230,966 (1993, Voss and Chow).

In the interest of obtaining optimum sealing between fuel cell plates in the stack, it may be desirable to assemble the fuel cell components while the most recently deposited ink layer is still wet, so that such partly wet layers of adjacent plates may bond together sealingly notwithstanding departures from nominal dimensions. By proceeding in this way, because the most recently deposited ink layer will still be at least partly fluid, yielding of the partly wet layer will tend to accommodate any dimensional inaccuracies. Thus opposed mating partly wet wall surfaces of adjacent plates can yield slightly when meeting during the stack assembly process so as to close off any gaps that might otherwise occur between the flow-field walls and the adjacent planar surfaces of the adjoining plate. This procedure will also tend (desirably) to reduce electrical contact resistance between adjacent components in the fuel cell stack.

Depending on the nature of the ink, further pre-deposition and post-deposition processes to treat the ink or the printed plates (*i.e*., the plates bearing deposited layers forming channel walls) can be provided by different techniques to improve the conductivity of the plates and to reach near-ideal porosity for gas diffusion to the MEA of a PEM-type fuel cell. These optional processes include:
(a) Adding pore formers to the ink, and drying the printed layers with heat so as to enhance pore formation.
(b) Adding petroleum pitch to the ink and, following deposition, transforming it into conductive carbon through a sintering process. The bonded carbon walls produced in this manner will tend to be porous.
(c) Adding sugar to the ink and, following deposition, using a strong acid (oxidant) to post-process the printed plate to transform the sugar into conductive carbon. Again, the bonded carbon walls produced in this manner will tend to be porous.

A useful advantage of the screen-printing technique according to the invention is that the flow channels can take any desired shape, and can be tapered from one end to another. This facilitates the establishment of a preferred pressure drop through the flow channels when the fuel cell stack operates, and may, with the selection of suitable channel configurations, promote turbulence within the channels, improving the transfer of gases to the MEA. Further, the boundaries of the ink deposit tend to be somewhat irregular, thereby increasing turbulence and pressure drop, which is generally advantageous.

It is also possible to use as a substrate a plate molded to a selected non-planar shape instead of a flat plate substrate. In such case, an initial wall pattern would be formed in the plate as molded, and then one would vary the resulting final pattern on the molded plate by screen printing, adding layers selectively according to a pattern different from the initial pattern molded into the plate. It would also be possible, although not normal for manufacture of fuel cells according to current designs, to use curved plates instead of flat plates as the starting substrates.

The choice of number of layers deposited depends upon the desired channel depth and the thickness of the layer that can be advantageously laid down in a single deposit. This is best determined empirically, given the variety of screen printing machines, inks and other suitable depositable materials that can be used in the process.

Hydrogen may be used as a fuel gas in a PEM-type fuel cell that uses two flow-field plates that are embodiments of the present invention. Each plate includes a discrete substrate and mutually spaced walls deposited on the substrate as a series of initially liquid formable layers that solidify and bond together and to the substrate. The walls on a selected side of one plate constitute boundaries of flow channels of a hydrogen flow field and the walls on a selected side of the other plate constitute boundaries of flow channels of an oxidant flow field. The walls with the adjoining substrate surfaces define each flow field. A membrane electrode assembly having an anode side comprising porous anode material, a cathode side comprising porous cathode material, an electrolytic membrane layer disposed between the two sides, an anode electro-catalyst layer disposed between the electrolytic membrane layer and the anode material, and a cathode electro-catalyst layer disposed between the electrolytic membrane layer and the cathode material is installed in the fuel cell between the selected side of the first plate and the selected side of the second plate. The selected side of the first plate faces and is in contact with the anode side of the membrane electrode assembly and the selected side of second plate faces and is in contact with the cathode side of the membrane electrode assembly so that the hydrogen flow channels are closed to form a conduit for supplying hydrogen to the membrane electrode assembly and the oxidant flow channels are closed to form a conduit for supplying oxidant to the membrane electrode assembly.

Hydrogen may also be used as a fuel gas in a PEM-type fuel cell that uses a membrane electrode assembly as a flow-field plate that is an embodiment of the present invention. The membrane electrode assembly has an anode side comprising porous anode material, a cathode side comprising porous cathode material, an electrolytic membrane layer disposed between the two sides, an anode electro-catalyst layer disposed between the electrolytic membrane layer and the anode material, and a cathode electro-catalyst layer disposed between the electrolytic membrane layer and the cathode material. Mutually spaced walls are deposited on each side of the membrane electrode assembly as a series of initially liquid formable layers that solidify and bond together and to the membrane electrode assembly. The walls on the anode side of the membrane electrode assembly constitute boundaries of flow channels of a hydrogen flow field and the walls on the cathode side of the membrane electrode assembly constitute boundaries of flow channels of an oxidant flow field. The walls together with the adjoining membrane electrode assembly surfaces define each flow field. The membrane electrode assembly is installed in the fuel cell between separator plates. One separator plate faces and is in contact with the walls of the anode side of the membrane electrode assembly and the other separator plate faces and is in contact with the walls of the cathode side of the membrane electrode assembly. The hydrogen and oxidant flow channels are thereby closed to form conduits for supplying hydrogen to the anode side of the membrane electrode assembly and oxidant to the cathode side of the membrane electrode assembly, respectively.

Both of PEM-type fuel cells described in the preceding paragraphs operate when hydrogen is supplied to the hydrogen conduit, oxygen is supplied to the oxidant conduit, and an external circuit that includes a load and is capable of receiving electrons from the anode electrode and supplying electrons to the cathode electrode is connected to the anode electrode and the cathode electrode. Then hydrogen moves from the hydrogen flow field through the porous anode electrode material of the membrane electrode assembly and is ionized at the anode electro-catalyst of the membrane electrode assembly to yield electrons and hydrogen ions. The electrolytic membrane layer of the membrane electrode assembly is permeable to hydrogen ions (protons), but is not conductive. Hence only the hydrogen ions may migrate through the electrolytic membrane layer. The hydrogen ions after migrating through the electrolytic membrane react with oxygen that has moved from oxidant flow field through the porous cathode electrode material of the membrane electrode assembly to the cathode electro-catalyst and electrons supplied by the external circuit. The reaction product is water. To make up for the electrons provided to the cathode electrode the external circuit receives electrons from the anode electrode. A useful current of electrons through the load is thereby provided.

While the invention has as one of its most useful applications the manufacture of flow-field plates for PEM-type fuel cells, the invention may be used in the manufacture of other types of fuel cells in which comparable flow-field plates are used, such as alkaline fuel cells. Operating temperature constraints and constraints on other parameters applicable to certain types of fuel cell may not be conducive to the use of the invention for such types, especially given the need for structural stability and high-temperature resistance of the materials required for such types, ruling out the use of printable ink compositions that may be satisfactory for the lower temperature operation of PEM-type fuel cells. For the most part, the present specification uses PEM-type fuel cells as examples, it being understood that with appropriate modifications, the principles of the invention may be applied to at least some other fuel cell types, notably alkaline fuel cells. Use of appropriate ink material such as the stated Hyper Cast™ Graphite cement will extend the application of this invention into high temperature fuel cells.

In summary, flow-field fabrication techniques according to the present invention offer advantages relative to previously known fabrication methods, including:
(a) relatively low equipment, processing and material costs;
(b) suitability for small-scale batch processing as well as mass production;
(c) ability to make use of different materials with different physical characteristics in different regions of the deposited layers forming the flow-field pattern;
(d) ability to support more complex flow field designs that are not constrained by the cutter geometry of a machining process, and the homogenous plate material requirement of other manufacturing processes; and
(e) reduction of waste material.

### BRIEF DESCRIPTION OF THE DRAWINGS

**Fig. 1** is an exploded isometric view of a conventional PEM-type fuel cell stack showing a representative set of detached fuel cell plates.
**Fig. 2** is a schematic section view of a separator plate bearing layered walls forming a flow-field pattern, the walls having been applied to the plate by deposition in accordance with the present invention.
**Fig. 3** is a schematic section view of a separator plate of the type shown in **Fig. 2,** produced using two different materials, a porous material over the electrochemically active area of the plate and a sealing wall and retaining wall therefor at the edge of the plate.
**Fig. 4** is a schematic section view of a separator plate of the type shown in **Fig. 3** but additionally provided with a protective layer bonded to the separator plate substrate prior to deposition of the flow-field channel walls, and illustrating the formation of a series of layers of different materials or properties.
**Fig. 5** is a schematic exploded section view of a pair of consecutive units of a fuel cell stack including separator plates each of the type shown in **Fig. 2** but additionally provided with a second flow-field pattern applied on the opposite side of such separator plate in accordance with the invention.
**Fig. 6** is a schematic exploded section view of a pair of consecutive units of a fuel cell stack similar to the type illustrated in **Fig. 5** but in which the layered flow-field channel walls are shown as having been deposited onto and bonded to the porous electrode layers of the MEAs instead of bonded to the separator plates.
**Fig. 7** is a schematic exploded section view of a pair of consecutive units of a fuel cell stack of the type illustrated in **Fig. 6** but in which the layered flow-field channel walls are shown as having been deposited onto and bonded to an outer protective layer for the porous electrode layers of the MEAs.
**Fig. 8** is a schematic exploded sectional fragment of a fuel cell stack structure essentially identical to that of **Fig. 5,** with only one subunit of the fuel cell stack being illustrated instead of two, and with an exemplary six layers being illustrated instead of three.
**Fig. 9** is a schematic fragmentary section view of a stencil suitable for use in implementing the deposition procedure according to the invention shown in contact with a substrate to which a first layer of an intended deposit has been applied in accordance with the principles of the invention.
**Fig. 10** is a schematic fragmentary section view of a portion of the substrate and wall deposit thereon, constructed in accordance with the invention and formed by using the stencil of **Fig. 9.**
**Fig. 11** is a schematic elevation view of a simplified screen printer suitable for use in the implementation of the process according to the invention.

### DETAILED DESCRIPTION

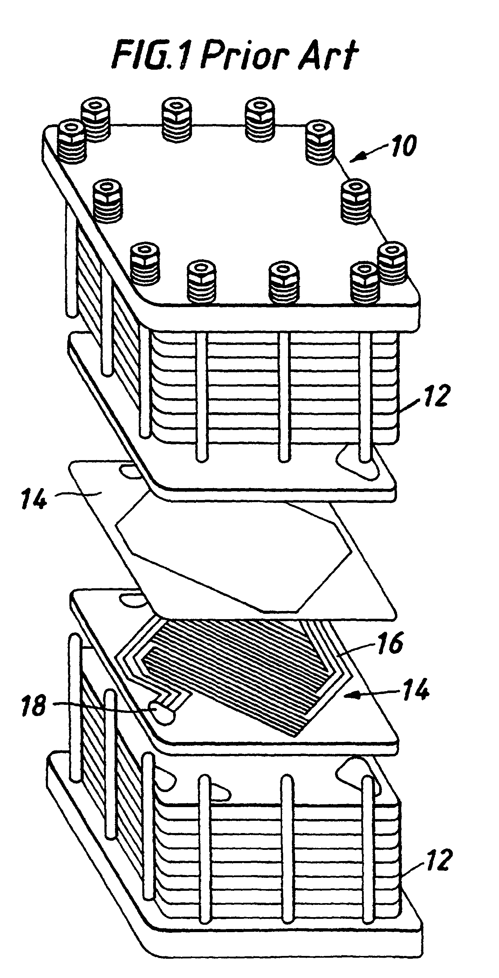

Turning first to **Fig. 1**, a conventional PEM-type fuel cell stack assembly 10 contains a stacked series of MEA layers or strata **12** each interposed between adjacent separator plates **14.** Flow-field channels **16** are machined or otherwise formed in the separator plates **14** in a generally serpentine path extending between reactant gas supply plenum or manifold **18** and a corresponding fluid exhaust plenum or manifold (not seen in the drawing; obscured by overlying MEA stratum **12**).

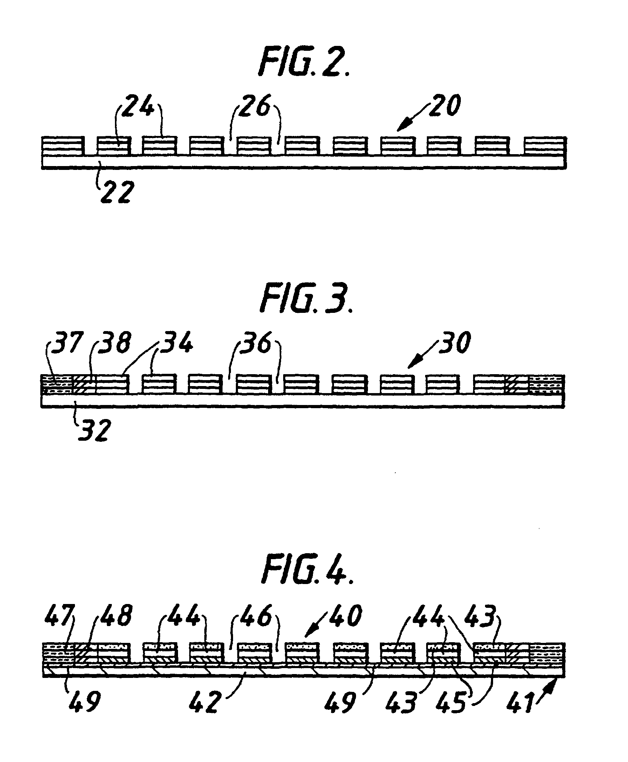

**Fig. 2** illustrates in schematic section view a slice through a flow-field wall structure pattern **20** formed according to the present invention by sequentially depositing a series of layers of conductive material on one face of a conductive planar substrate **22** in accordance with a selected pattern to form lands (walls) **24** defining the one-sided flow-field pattern **20.** The flow-field pattern **20** may be, for example, a serpentine pattern of the general type illustrated in **Fig. 1**. For sake of simplicity, a three-layer deposit is illustrated, each layer having been sequentially deposited upon and bonded to the immediately preceding layer in accordance with the screen stencil pattern chosen, with the qualification that the layer first deposited bonds immediately to the substrate **22.** Fluid-flow channels **26** are formed on the face of the substrate as the spaces between the walls **24** of deposited material. The channels **26** are interconnected in any suitable manner (*cf*. plate **14** of **Fig. 1**) to form one or more continuous fluid conduits between the substrate **22** and an adjacent electrochemically active surface (not shown, *cf.* MEA stratum **12** of **Fig. 1**). When the plate of **Fig. 2** is installed in a fuel cell stack, the electrochemically active surface in contact with the previously exposed distal surfaces of the walls **24** (the uppermost surfaces as seen in **Fig. 2**) covers the flow field, closing the channels **26** to form reactant gas flow conduits (which of course remain open at their ends for connection to reactant gas sources and sinks, as the case may be). In a typical fuel cell, the lands **24** tend to rise from about 0.7 to 1 millimetre in height above the planar surface of the substrate **22,** although the designed height of the lands may be expected to vary depending upon overall dimensions of the fuel cell, pressures, flow rates, and other parameters of the fuel cell. The manner of screen deposition of successive layers onto the substrate has been described above; it is of course necessary that alignment of the substrate with the screen stencil be preserved throughout the deposition of the successive layers.

**Fig. 3** illustrates in schematic section view a slice through a flow-field wall structure pattern **30** formed according to the present invention in essentially the same manner as the pattern **20** of **Fig. 2,** with various types of ink materials deposited in selected locations across the substrate **32** to achieve design objectives. A partial fluid-permeable (porous) material is preferably used over the electrochemically active area at the center of substrate **32.** The deposited layers form lands or walls **34.** Reactant flow channels **36** are consequently formed between neighbouring lands **34.** To seal the flow-channel area from the exterior of the fuel cell, a sealing element **38** is provided; it can be a separately bonded gasket or can be built up by deposition of a suitable sealing material using the deposition technique of the invention. A fluid-impermeable material **37** (for example, a thermoplastic or thermosetting seal or a rubber-type compound or a deposited material such as graphite cement that solidifies upon sintering or curing) may optionally be used to provide a retainer for the sealing element **38** and to provide structural integrity to the stack, as well as providing "insurance" sealing around the edge of the plate **32** to provide sealing reinforcement for the sealing element **38.** For manufacturing economy, optimally the layer deposition of topographical elements other than the flow-field walls (such as the seals **37**) is effected synchronously with the deposit of the layers of the flow-field walls.

**Fig. 4** illustrates the use of a coated, plated, or sandwiched substrate **41** to replace the solid substrate **32** of **Fig. 3** that is made of a single material. The substrate **41** consists of a protective conductive layer **49** and a rigid layer **42.** The rigid layer **42** made of a strong low-cost material, such as metal, provides structural support for the plate **41.** The protective layer **49** prevents any undesirable corrosion of the rigid layer **42** and prevents ion poisoning of the adjacent proton exchange membrane (not illustrated in **Fig. 3**) that might otherwise be caused by the metal in the rigid layer **42.**

Flow-field wall structure pattern **40** of **Fig. 4** is formed according to the present invention in essentially the same manner as the flow-field wall pattern **20** of **Fig. 2** and the pattern **30** of **Fig. 3,** but with various types of ink materials deposited at different layers to build the flow-field walls to achieve desired functional objectives of the design. The deposited layers form lands **44** between which are consequently formed reactant flow channels **46.** The innermost deposited layers **43** that will in the fuel cell stack lie closest to the electrochemically active regions of the fuel cell are preferably formed using more porous material than the layers **45** of the walls **44** that will be in the stack more remote from the electrochemically active regions, given the desirability that the wall material should in the vicinity of the electrochemically active regions facilitate the delivery of oxidant and reactant gases to the electrochemically active areas of the fuel cell, while the absence of porosity in the more remote layers of the walls may impart desired strength and conductivity to the deposited walls **44.** As in **Fig. 3,** fluid-impermeable material **47** is deposited in a series of layers around the edge of the substrate **41** to enhance a suitable sealing element **48**, such as a gasket.

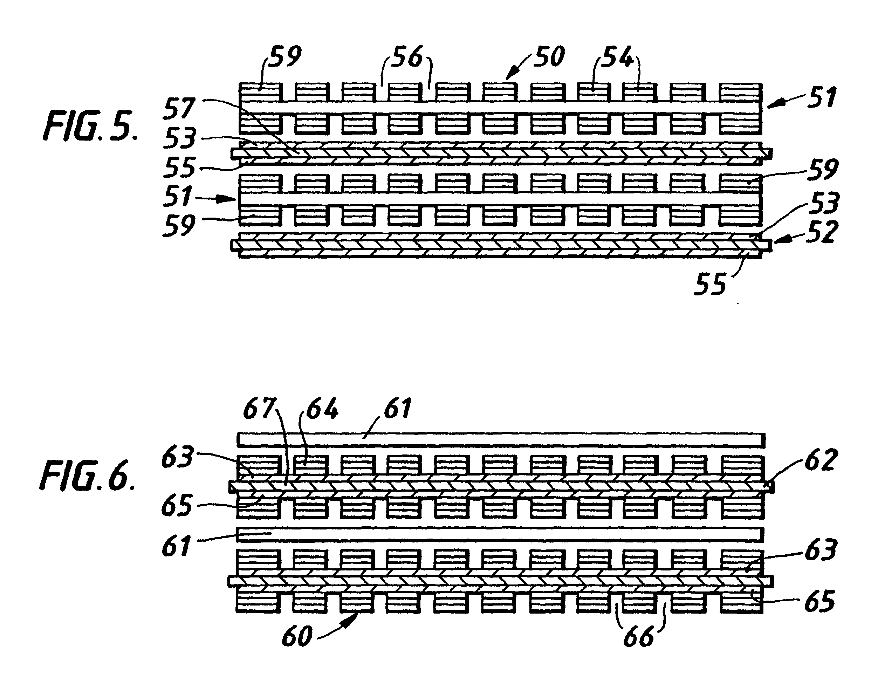

**Fig. 5** illustrates in schematic section view a slice through two successive units of a fuel cell stack, each unit comprising a double-sided flow-field patterned separator plate **51** and an MEA **52,** the latter comprising an inner porous polymeric electrolytic membrane layer **57** on either side of which are porous electrode layers **53, 55**. The flow-field wall structure pattern **50** formed according to the present invention on each side of each separator plate **51** is deposited as a series of successive layers in essentially the same manner as the pattern **20** of **Fig. 2,** the deposited layers forming lands **54** between which are formed reactant flow channels **56.** Note that the flow-field pattern on one side of the plate **51** does not need to match the flow-field pattern on the other side of the plate **51.** Since the flow fields on the two sides of any separator plate **51** are for different reactant gases, one for fuel and the other for oxidant, the flow field patterns may optimally be chosen to be different to accommodate different gas densities, flow rates and pressures.

In **Fig. 5,** for purposes of illustration, the outer layers of the lands **54** are shown out of contact with the MEAs **52.** However, of course in actual construction, the outer layers of lands **54** would come into close contact with the MEAs **52** to provide a functioning flow field immediately adjacent the MEAs **52.** One electrode layer **53** of each MEA **52** is disposed in contact with the last-deposited layers of lands **54** defining the flow field on one side of one adjacent separator plate **51,** and the other electrode layer **55** of that same MEA **52** is disposed in contact with the last-deposited layers of lands **54** defining the flow field on the opposite side of a different adjacent separator plate **51.**

Note that it is not critical that the lands **54** make continuous contact with adjacent surfaces of the MEAs **52.** It is sufficient if the reactant gas is directed to the working surface area of the MEAs **52;** minor imperfections leaving slight gaps between the lands **54** and the MEAs **52** can be tolerated. To eliminate or at least substantially reduce the number of such imperfections, as previously mentioned, it is desirable to assemble the fuel cell stack when the last-deposited layers **59** of the lands **54** have not yet firmly set or bonded, so that these last-deposited layers **59** can yield and conform over their length with the adjacent surface of the MEAs **52,** leaving few if any gaps.

Note also that the configuration of **Fig. 5** does not take into account the need to provide end current collector plates (electrodes) at each end of the fuel cell stack; the continuing stack pattern of **Fig.5** must be discontinued and replaced by transitional configurations at each end of the stack. For example, the last separator plate at each end of the stack could be provided with flow-field walls on only one side (as illustrated in **Fig. 2**), permitting the side of the separator plate without flow-field walls to serve as a terminal plate in immediate contact with the end current collector plate.

Hydrogen may be used as a fuel gas in the fuel cell stack illustrated in **Fig. 5.** For example, consider the porous electrode layers **53** to be anode electrode layers and the flow fields and the reactant flow channels on the sides of plates **51** facing the porous electrode layers **53** to be a hydrogen flow fields and hydrogen flow channels. Similarly, consider the porous electrode layers **55** to be cathode electrode layers and the flow fields and the reactant flow channels on the sides of plates **51** facing the porous electrode layers **55** to be a oxidant flow fields and oxidant flow channels. Between each electrolytic membrane layer **57** and the adjoining pair of porous electrode layers **53, 55** are thin layers of electro-catalyst material (not shown). Together, each pair of porous electrode layers **53, 55,** the layers of electro-catalyst material, and the electrolytic membrane layer **57** comprise an MEA **52.** When the fuel cell stack shown in **Fig. 5** is assembled, the hydrogen and oxidant flow channels are thereby closed to form conduits for supplying hydrogen to the anode electrode layers **53** and oxidant to the cathode electrode layers **55,** respectively. If we focus on a single elemental fuel cell comprising one MEA **52** and the plates **51** whose lands (walls) **54** contact that MEA **52** and consider the rest of the fuel cell stack to be part of an external circuit that includes a load and is capable of receiving electrons from the anode electrode layer **53** of that MEA **52** and supplying electrons to the cathode electrode layer **55** of that MEA **52,** then when hydrogen is supplied to the hydrogen conduit formed between the anode electrode layer **53** of that MEA **52** and oxygen is supplied to the oxidant conduit formed between the cathode electrode layer **55** of that MEA **52,** hydrogen moves from the hydrogen flow field through the anode electrode layer **53** and is ionized at the electro-catalyst between the anode electrode layer **53** and the electrolytic membrane layer **57** to yield electrons and hydrogen ions. The hydrogen ions migrate through the electrolytic membrane layer **57** to react with oxygen that has moved from oxidant flow field through the cathode electrode layer **55** to the electro-catalyst layer between the cathode electrode layer **55** and the electrolytic membrane layer **57** and electrons supplied by the external circuit to form water. To make up for the electrons provided to the cathode electrode layer **55** the external circuit receives electrons from the anode electrode layer **53.** A useful current of electrons through the load is thereby provided.

**Fig. 6** illustrates in schematic section view a slice through two successive units of a fuel cell stack formed according to another embodiment of the present invention, each unit comprising a separator plate **61** and an MEA **62.** Each MEA **62** comprises an inner porous polymeric electrolytic membrane layer **67** to either side of which are bonded porous electrode layers **63, 65.** The flow-field wall structure patterns **60** for each fuel cell unit are formed as a pair of flow-field patterns on electrode layers **63, 65** on either side of each MEA **62.** The lands (walls) **64** forming the flow-field channel pattern are each deposited as a series of successive layers in essentially the same manner as the pattern **20** of **Fig. 2,** the deposited layers building to form the lands **64** between which are formed reactant gas flow channels **66.** Again, the flow-field pattern on one side of the MEA **62** does not need to match the flow-field pattern on the other side of the MEA **62.** As is the case with **Fig. 5,** for purposes of illustration, the outer layers of the lands **64** are shown out of contact with the separator plates **61.** However, of course in actual construction, the outer layers of lands **64** would come into close contact with the separator plates **61** to provide a functioning flow field immediately adjacent the MEAs **62.**

Hydrogen may also be used as a fuel gas in the fuel cell stack illustrated in **Fig. 6.** For example, consider the porous electrode layer **63** to be the anode electrode layer and the flow field and the reactant flow channels on the side of plate **61** facing the porous electrode layer **63** to be a hydrogen flow field and hydrogen flow channels. Similarly, consider the porous electrode layer **65** to be the cathode electrode layer and the flow field and the reactant flow channels on the side of plate **61** facing the porous electrode layer **65** to be a oxidant flow field and oxidant flow channels. Between the electrolytic membrane layer **67** and each of the porous electrode layers **63, 65** is a thin layer of electro-catalyst material (not shown). Together the porous electrode layers **63, 65,** the layers of electro-catalyst material, and the electrolytic membrane layer **67** comprise the MEA **62.** When the fuel cell stack shown in **Fig. 6** is assembled, the hydrogen and oxidant flow channels are thereby closed to form conduits for supplying hydrogen to the anode electrode layer **63** and oxidant to the cathode electrode layer **65,** respectively. If we focus on a single elemental fuel cell comprising one MEA **62** and the plates **61** that contact the lands (walls) **64** of that MEA **62** and consider the rest of the fuel cell stack to be part of an external circuit that includes a load and is capable of receiving electrons from the anode electrode layer **63** of that MEA **62** and supplying electrons to the cathode electrode layer **65** of that MEA **62,** then when hydrogen is supplied to the hydrogen conduit formed between the anode electrode layer **63** of that MEA **62** and one of the plates **61** and oxygen is supplied to the oxidant conduit formed between the cathode electrode layer **65** of that MEA **62** and the other of the plates **61,** hydrogen moves from the hydrogen flow field through the anode electrode layer **63** and is ionized at the electro-catalyst between the anode electrode layer **63** and the electrolytic membrane layer **67** to yield electrons and hydrogen ions. The hydrogen ions migrate through the electrolytic membrane layer **67** to react with oxygen that has moved from oxidant flow field through the cathode electrode layer **65** to the electro-catalyst layer between the cathode electrode layer **65** and the electrolytic membrane layer **67** and electrons supplied by the external circuit to form water. To make up for the electrons provided to the cathode electrode layer **65** the external circuit receives electrons from the anode electrode layer **63.** A useful current of electrons through the load is thereby provided.

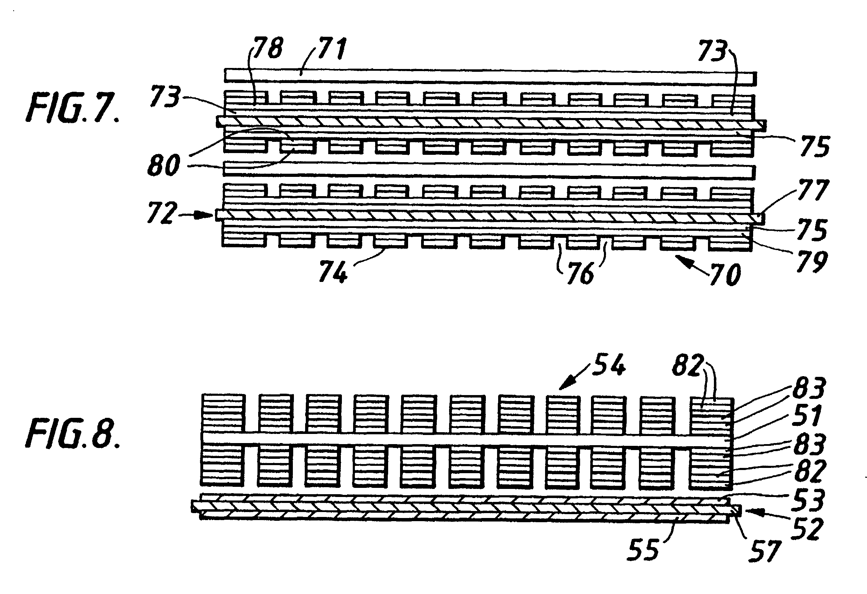

**Fig. 7** illustrates in schematic section view a slice through two successive units of a fuel cell stack formed according to another embodiment of the present invention, each unit comprising a separator plate **71** and an adjacent MEA **72.** The structure of **Fig. 7** is very similar to the structure of **Fig. 6.** Each MEA **72** comprises an inner polymeric electrolytic membrane layer **77** to either side of which are bonded porous electrode layers **73, 75.** In this embodiment, each porous electrode layer **73, 75** of the MEA **72** is provided with an outer protective layer **78, 79** respectively on which the layers **80** forming lands **74** are deposited in accordance with the screen printing technique previously described. The protective layers **78, 79** are formed using conductive porous materials, such as porous carbon paper or a printed graphite/carbon porous shield. These layers **78, 79** may be formed by broad surface layer screen deposition using a stencil with open mesh over the entirety of the substrate area. The lands (walls) **74** forming the flow-field channel patterns **70** are each deposited as a series of successive layers **80** in essentially the same manner as the pattern **20** of **Fig. 2,** the deposited layers building to form the lands **74** between which are formed reactant gas flow channels **76.** Again, the flow-field pattern on one side of each MEA **72** does not need to match the flow-field pattern on the other side of the MEA **72.**

**Fig. 8** schematically illustrates an exploded sectional fragment of a fuel cell structure essentially identical to that of **Fig. 5,** with only one subunit of the fuel cell stack being illustrated instead of two, and with an exemplary six layers being illustrated instead of three. Given the need for the reactant gases to reach the catalytic electrode layer via the adjacent porous electrode layer, it is desirable to increase the porosity of the lands in the vicinity of the porous electrode layer. Accordingly, the outer (most recently deposited) layers **82** that will be closest to the porous electrode layers **53, 55** of the MEA **52** can be formed from a deposit that includes a porosity-enhancing substance or that has been subjected to a porosity-enhancing process of the types previously described or substitute such substances or processes. To maintain high electrical conductivity and to promote structural strength and integrity of the walls, the earliest deposited innermost layers **83** closest to the separator plate **51** can be made of less porous material. A similar variation in material porosity can of course be arranged for the alternative configurations of **Figs. 6** and **7** or other configurations selected for use as subunits in the fuel cell stack. Furthermore, the ability to change the composition and deposit pattern of the layering material with each successive deposit means that dimensions, conductivity, bonding capability, strength and other parameters can be varied from one deposited layer to the next. Further, by selecting part of the screen wall deposit pattern for a given layer to be blocked and the remainder open, effecting a material deposit, and then reversing the blocked and open pattern areas and making a second material deposit to fill in the interstices between the regions of the first such partial deposit, it is possible to vary the material deposited in given regions of the deposit pattern even within a single layer level. And of course it is possible to use two or more screen stencils with different deposit patterns and to use each one of them to deposit a different material, thereby generating a multiple-material wall structure, different walls serving different purposes. The simple example of **Fig. 3** is illustrative of this last possibility.

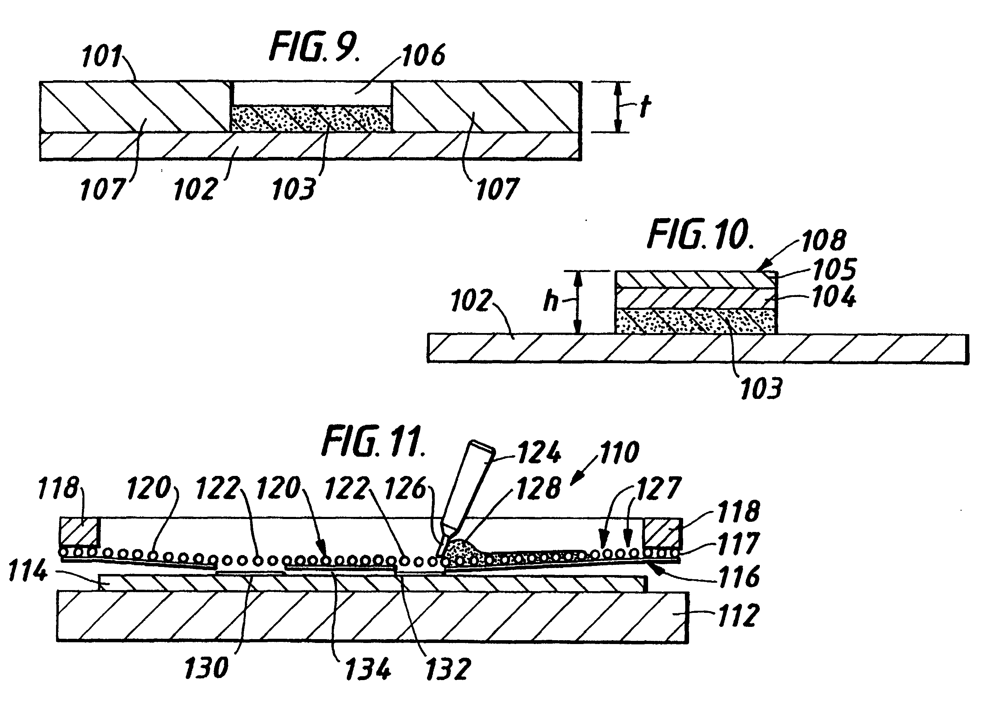

**Figs. 9** and **10** illustrate in simplified schematic form the process according to the invention. In **Fig. 9**, a schematically illustrated stencil **101** is positioned immediately adjacent and in contact with underlying substrate **102** on which the lands or walls of the flow channel pattern are to be deposited. The stencil **101** includes solid portions **107** blocking the flow of ink or other depositable material therethrough and open spaces **106** through which ink (or other suitable material) deposition is effected, so as to construct spaced lands of which land **108** is exemplary.

The stencil **101** may be cut manually from a film or a plate of the required thickness or may be manufactured photographically using an appropriate stencil film, in conformity with a selected flow-field design pattern.

The stencil **101** maintains alignment with substrate **102** throughout the deposition process. The stencil **101** may be lifted out of contact with the substrate **102** after each layer is deposited so as to facilitate drying, and then repositioned for deposit of the next layer, until land **108** has been built up to its full design height. After the deposition of any given layer, the deposited ink (or other material) is permitted to dry, cure and/or bond to the substrate (or to the previously deposited layer) before a further layer is deposited. About 30-40% shrinkage typically occurs upon drying of each wet deposited layer, but choice of materials and porosity-inducing treatment may significantly affect these values; porosity-inducing treatments may cause expansion of the deposited layer.

Assume for purposes of illustration that substrate **102** is an MEA layer. Accordingly, it will be desirable to form the first deposited layer **103** of the eventual land **108** as a porous layer, so that reactant gas will be more readily able to penetrate the underlying MEA layer **102.** As discussed above, the porosity in layer **103** can be devised by pre-deposition ink treatment and post-deposition heat or other suitable treatment, so as to generate porosity within the layer **103.**

Further assume that, for the sake of simplicity, three successive depositions are required to build up land **108** to its full design height **h** which, for convenience, is selected to coincide with the height **h (Fig. 10).** (The eventual layer height **h** may typically be somewhat greater than the thickness **t** of the solid portions **107** of stencil **101.)** The deposition process is stopped when the expected post-drying height of land **108** reaches the design height **h** of the flow-field walls.

In order that the lands **108** have adequate structural integrity and conductivity, subsequent deposited layers **104** and **105** can be made of less porous, stronger material. Although for purposes of illustration in **Fig. 10,** the boundaries between successively deposited layers **103, 104, 105** are clearly demarcated, nevertheless, the layers **103, 104, 105** would be expected to fuse together to form a land without discernible boundaries between successively deposited layers.

As discussed above, different types of material can be deposited in different spaces **106** of the stencil **101** to build up topographical elements such as lands or walls for different purposes, such as sealing.

**Fig. 11** schematically illustrates a screen printing machine suitable for the implementation of the deposition process according to the invention. The screen printing machine generally indicated as **110** comprises a base platen **112** and a frame **118** that supports a stencil **116** and a printing mesh (screen) **117** directly overlying the stencil **116** above a substrate **114** on which ink layers are to be deposited. It can be seen that the stencil **116** comprises closed portions **120** through which ink **128** cannot pass, and open areas **122** through which ink **128** can pass. Ink **128** will fill all of the interstices **127** of the mesh **117,** but will pass through the mesh **117** to be deposited upon the substrate **114** only where there are gaps or open areas **122** in the stencil **116.**

In operation, ink **128** is deposited on the mesh **117** using a squeegee **124** passed thereover, moving from left to right as seen in **Fig. 11.** The squeegee blade **126** forces ink **128** into the interstices of the mesh **117.** Ink **128** will pass through the mesh and be forced onto substrate **114** via open portions **122** of the stencil **116.** Ink will thus be uniformly deposited on the substrate **114** in conformity with the open pattern of stencil **116.** Thus, there are shown successive ink deposits **130, 132** on substrate **114** that are aligned with the open areas **122** of stencil **116** over which the squeegee **124** has already passed.

### EXAMPLE:

A thick stencil conforming to the intended flow-field pattern was prepared using a conventional computer-printed negative applied photographically to the stencil to create the requisite openings in the stencil through which ink would be deposited to form the layers that generate the lands or flow-field walls to be constructed. The target ink thickness was 0.7 mm, and the stencil was prepared at the same thickness, namely 0.7 mm.

During the screen-printing process, the stencil was supported by a regular 140-mesh synthetic screen and the alignment of the screen and substrate was maintained by the screen-printing machine used. Alternatively, when the screen-printing was effected manually, alignment was maintained by means of a simple three-pin system, whereby the stencil and substrate were maintained in alignment throughout the deposition process.

For this particular target land height (0.7 mm), three successive depositions of ink were made, each in an amount selected to produce cumulatively the required dry land height. The layer height of the depositions, each of which was non-porous, was selected to be 0.4 mm each, shrinking to about half-height upon drying, giving a cumulative total of about 0.7 mm for the three deposited layers. Since the exact shrinkage of non-porous layers and the shrinkage or expansion of any porous layer upon drying may be expected to vary considerably from case to case, empirical fine tuning of the process is generally necessary to achieve the designed land height.

The ink used to form the flow channel walls consisted of an ink base with a conductive ink filler. It was a design objective of the deposited lands that they should withstand the high humidity and temperature of a fuel cell working environment, should have good electrical conductivity, should not poison the catalysts nor have any other deleterious effect on the proton exchange membrane, and should have sufficient structural integrity to remain stable within a fuel cell stack.

To meet these objectives, the ink preparation used was a mixture of fine graphite powder and flakes (about 40% in volume, although the range about 30-70% is feasible) with the commercially available water-based poster ink WB5101. This ink can economically produce a fuel cell oxidant and reactant gas flow-field plate with satisfactory structural integrity, conductivity and stability at high temperature and humidity. This ink has a relatively high viscosity, lending itself to screen printing.

Experiment suggests that typical graphite-containing inks have optimum conductivity at about 40% graphite solids per volume. This figure will vary depending upon the type of ink base and ink solid used. A high-graphite ink will typically require incorporation of finer ink solid particles. The less conductive ink base then coats these particles, and reduces the chance of direct contact among the conductive ink solids, reducing the conductivity of the printed channel wall.

While particular elements, embodiments and applications of the present invention have been shown and described, it will be understood, of course, that the invention is not limited thereto, since modifications may be made by those skilled in the applicable technologies, particularly in light of the foregoing description. The appended claims include within their ambit such modifications and variants of the exemplary embodiments of the invention described herein as would be apparent to those skilled in the applicable technologies.

## Claims

1. A flow-field plate for a fuel cell comprising a substrate and mutually spaced walls deposited on the substrate as a series of initially liquid formable layers that solidify and bond together and to the substrate, the walls constituting boundaries of flow channels of a flow field for the plate, said walls with the adjoining substrate surface defining the flow field.

2. A flow-field plate as defined in claim 1, wherein the substrate is substantially planar.

3. A flow-field plate as defined in claim 1 or 2, wherein the walls are of generally even height above the substrate.

4. A flow-field plate as defined in claim 1, 2 or 3, wherein the flow channels are interconnected to form, when the plate is installed in a fuel cell stack, a fluid conduit between the plate and an adjacent surface in contact with the previously exposed distal surfaces of the walls that closes the flow channels to form the fluid conduit.

5. A flow-field plate as defined in claim 4, wherein the adjacent surface is the surface of an electrochemically active region of the fuel cell, and the fluid conduit is a reactant gas conduit.

6. A flow-field plate as defined in any of the preceding claims, wherein the surface of the substrate adjoining the walls is inert to reactant gases in the fuel cell and non-poisonous to the fuel cell.

7. A flow-field plate as defined in any of the preceding claims, wherein the initially liquid layers deposited are viscous inks or pastes that solidify upon curing.

8. A flow-field plate as defined in any of the preceding claims, wherein the walls are formed by screen printing.

9. A flow-field plate as defined in any of the preceding claims, wherein the walls are made of a first selected material at first predetermined locations on the substrate and made of a second selected material at other predetermined locations on the substrate.

10. A flow-field plate as defined in claim 9, wherein the first and other locations are differentiated from one another in one or more planes parallel to the plane of the substrate.

11. A flow-field plate as defined in claim 9, wherein the first and other locations are differentiated from one another in one or more planes perpendicular to the plane of the substrate.

12. A flow-field plate as defined in any of claims 1 to 8, wherein selected ones of said walls are made of conductive material and certain others of said walls are made of non-conductive material.

13. A flow-field plate as defined in any of claims 1 to 8, wherein the walls are made of conductive material.

14. A flow-field plate as defined in claim 13, wherein the substrate is made of electrically conductive material.

15. A flow-field plate as defined in any of the preceding claims, wherein the substrate is thin and substantially rigid.

16. A flow-field plate as defined in any of claims 1 to 8 and 12 to 15, wherein the initially liquid formable layers contain finely particulate carbon that coaleces and solidifies into a solid mass to form the walls.

17. A flow-field plate as defined in any of the preceding claims, wherein the substrate is a separator plate.

18. A flow-field plate as defined in any of claims 1 to 4, wherein the substrate is an electrochemically active stratum of the fuel cell, and the walls are electrically conductive.

19. A flow-field plate as defined in any of the preceding claims, wherein the walls are made of material inert to reactant gases in the fuel cell and non-poisonous to the fuel cell.

20. A flow-field plate as defined in any of the preceding claims, wherein a pair of respective flow-field patterns of said walls, each said pattern for an associated reactant gas, are each deposited on an associated one of the two sides of the substrate.

21. A flow-field plate as defined in any of the preceding claims, wherein the flow-field channels are tapered from one end to another.

22. A flow-field plate as defined in any of the preceding claims for use in a PEM-type fuel cell stack.

23. A method of making a flow-field plate or portion thereof for a fuel cell comprising
(a) depositing on a substrate a series of layers of controlled quantities of initially liquid formable material in a pattern conforming to a designed pattern of flow-field walls, the initial such layer coalescing and bonding to the substrate upon curing, each subsequently deposited such layer coalescing and bonding to the immediately preceding such layer upon curing; and
(b) at least partially curing each layer after deposit thereof on the substrate to establish dimensional stability and structural integrity of such layer before depositing the next following layer;
thereby to build up a cohesive solid pattern of walls on the substrate conforming to the designed pattern of flow-field walls.

24. A method as defined in claim 23, wherein the material of which the walls are made is electrically conductive.

25. A method as defined in claim 23 or 24, wherein the wall layers are deposited by screen deposition through a stencil aligned with the substrate and having openings therein for passage of the initially liquid material therethrough in a pattern conforming to the designed pattern of flow-field walls.

26. A method as defined in any of claims 23 to 25, wherein the initially liquid material is a viscous liquid containing conductive finely divided particles.

27. A method as defined in claim 26, wherein the conductive finely divided particles are made of carbon.

28. A method as defined in any of claims 23 to 27, wherein the initially liquid material is printing ink.

29. A method as defined in any of claims 23 to 27, wherein the initially liquid material is a castable graphite paste.

30. A method as defined in any of claims 23 to 29, wherein the initially liquid formable material includes a liquid carrier portion that evaporates upon curing, and wherein the curing is effected by drying.

31. A method as defined in any of claims 23 to 30, wherein the curing is effected by heating.

32. A method as defined in any of claims 23 to 29, wherein the curing is effected by exposure to ultra-violet radiation.

33. A method as defined in any of claims 23 to 29, wherein the curing is effected by sintering.

34. A method as defined in any of claims 23 to 33, additionally comprising sequentially depositing a series of layers of selected materials for forming on the substrate topographical elements other than flow-field walls.

35. A method as defined in claim 34, wherein the deposit layers for forming topographical elements other than flow-fields walls is effected in synchronism with the deposit of flow-field wall layers.

36. A method as defined in any of claims 23 to 35, wherein successive layers are applied before the preceding layer has completely cured, thereby to improve bonding of the successive layers to the layers they follow and to avoid gaps between successive layers.

37. A method as defined in claim 35, additionally comprising bonding the last-deposited wall layer to a stratum of the fuel cell before the last-deposited wall layer has completely cured, thereby to form a secure bond between the stratum and the walls formed on the substrate, and thereby to cover the flow field.

38. A method as defined in any of claims 23 to 37, wherein the layers deposited are non-uniform as to selected ones of their physical properties.

39. A method as defined in claim 38, wherein one of the layers of the flow-field walls when the flow-field plate is installed in a fuel cell stack is proximate to a neighbouring electrochemically active stratum, and wherein such layer is made of material more porous than the other said layers of the flow-field walls.

40. A method as defined in any of claims 23 to 39, wherein the wall pattern is selected to provide flow channels that taper from one end thereof to the other.

41. A method as defined in any of claims 23 to 40, wherein the material of which a selected one of said layers is made includes an agent that induces porosity of such selected layer upon curing.

42. A method as defined in any of claims 23 to 41, wherein the initially liquid formable material is passed through a porous mesh pattern in a screen stencil uniformly aligned with the substrate for each successive deposition of the layers of initially liquid formable material forming the pattern of walls on the substrate, the porous mesh pattern being congruent with the designed pattern of flow-field walls, thereby causing the initially liquid formable material to conform to the designed pattern of flow-field walls.

43. A method as defined in any of claims 23 to 42 for manufacturing a PEM-type fuel cell plate.

## Patentansprüche

1. Flussfeldplatte für eine Brennstoffzelle mit einem Substrat und gegenseitig beabstandeten Wänden, die auf dem Substrat als eine Reihe von anfangs flüssigen formbaren Schichten abgeschieden sind, die verfestigen und aneinander und an das Substrat binden, wobei die Wände Grenzen von Flusskanälen eines Flussfeldes für die Platte bilden, welche Wände mit der benachbarten Substratoberfläche das Flussfeld bilden.

2. Flussfeldplatte nach Anspruch 1, in welcher das Substrat im Wesentlichen eben ist.

3. Flussfeldplatte nach Anspruch 1 oder 2, in welcher die Wände von im Wesentlichen gleicher Höhe oberhalb des Substrates sind.

4. Flussfeldplatte nach Anspruch 1, 2 oder 3, in welcher die Flusskanäle miteinander verbunden sind, um, wenn die Platte in einem Brennstoffzellenstapel eingebunden ist, eine Fluidleitung zwischen der Platte und einer benachbarten Oberfläche in Kontakt mit den zuvor exponierten distalen Oberflächen der Wände zu bilden, die die Flusskanäle zur Bildung der Fluidleitung schließen.

5. Flussfeldplatte nach Anspruch 4, in welcher die benachbarte Oberfläche die Oberfläche einer elektrochemisch aktiven Region der Brennstoffzelle ist und die Fluidleitung eine Reaktionsgasleitung ist.

6. Flussfeldplatte nach einem der vorstehenden Ansprüche, in welcher die Oberfläche des Substrates benachbart zu den Wänden inert gegenüber den Reaktionsgasen in der Brennstoffzelle und ungiftig gegenüber der Brennstoffzelle ist.

7. Flussfeldplatte nach einem der vorstehenden Ansprüche, in welcher die anfangs flüssigen abgeschiedenen Schichten viskose Tinten oder Pasten sind, die bei Aushärten verfestigen.

8. Flussfeldplatte nach einem der vorstehenden Ansprüche, in welcher die Wände durch Siebdruck gebildet werden.

9. Flussfeldplatte nach einem der vorstehenden Ansprüche, in welcher die Wände aus einem ersten ausgewählten Material bei ersten vorbestimmten Positionen auf dem Substrat bestehen und aus einem zweiten ausgewählten Material an anderen vorbestimmten Positionen auf dem Substrat bestehen.

10. Flussfeldplatte nach Anspruch 9, in welcher die ersten und anderen Positionen voneinander durch eine oder mehrere Ebenen parallel zur Substratebene getrennt sind.

11. Flussfeldplatte nach Anspruch 9, in welcher die ersten und anderen Positionen voneinander durch eine oder mehrere Ebenen senkrecht zur Substratebene getrennt sind.

12. Flussfeldplatte nach einem der Ansprüche 1 bis 8, in welcher ausgewählte von den Wänden aus einem leitfähigen Material bestehen und bestimmte andere Wände aus einem nicht leitfähigem Material bestehen.

13. Flussfeldplatte nach einem der Ansprüche 1 bis 8, in welcher die Wände aus einem leitfähigen Material bestehen.

14. Flussfeldplatte nach Anspruch 13, in welchem das Substrat aus einem elektrisch leitfähigen Material besteht.

15. Flussfeldplatte nach einem der vorstehenden Ansprüche, in welcher das Substrat dünn und im Wesentlichen steif ist.

16. Flussfeldplatte nach einem der Ansprüche 1 bis 8 oder 12 bis 15, in welcher die anfangs flüssigen verformbaren Schichten fein verteilten Kohlenstoff enthalten, der koalesziert und in eine solide Masse verfestigt, um die Wände zu bilden.

17. Flussfeldplatte nach einem der vorstehenden Ansprüche, in welcher das Substrat eine Separatorplatte ist.

18. Flussfeldplatte nach einem der Ansprüche 1 bis 4, in welcher das Substrat ein elektrochemisch aktives Stratum der Brennstoffzelle ist und die Wände elektrisch leitfähig sind.

19. Flussfeldplatte nach einem der vorstehenden Ansprüche, in welcher die Wände aus einem gegenüber dem Reaktionsgasen in der Brennstoffzelle inerten Material bestehen und ungiftig gegenüber der Brennstoffzelle sind.

20. Flussfeldplatte nach einem der vorstehenden Ansprüche, in welcher ein paar von entsprechenden Flussfeldmustern der Wände jeweils auf zugeordneten der beiden Seiten des Substrates angeordnet sind, jeweils ein Muster für ein zugeordnetes Reaktionsgas.

21. Flussfeldplatte nach einem der vorstehenden Ansprüche, in welchem die Flussfeldkanäle von einem Ende zum anderen angeschrägt sind.

22. Flussfeldplatte nach einem der vorstehenden Ansprüche zur Verwendung in einem Brennstoffzellenstapel vom PEM-Typ.

23. Verfahren zur Herstellung einer Flussfeldplatte oder eines Abschnittes derselben für eine Brennstoffzelle aufweisend
(a) das Abscheiden einer Reihe von Schichten von gesteuerten Mengen von anfangs flüssigem verformbarem Material auf einem Substrat in einem Muster, welches einem entworfenen Muster von Flussfeldwänden entspricht, wobei diese anfängliche Schicht koalesziert und mit dem Substrat durch Aushärten bindet, jede anschließend abgeschiedene derartige Schicht koalesziert und mit der unmittelbar vorhergehenden Schicht durch Aushärten bindet; und
(b) wenigstens teilweises Aushärten einer jeden Schicht nach deren Abscheiden auf dem Substrat, um eine Dimensionsstabilität und strukturelle Integrität einer solchen Schicht vor dem Abscheiden der nächsten folgenden Schicht zu erhalten;
dadurch Aufbauen eines kohäsiven festen Musters von Wänden auf dem Substrat entsprechend dem entworfenen Muster von Flussfeldwänden.

24. Verfahren nach Anspruch 23, in welchem das Material, aus dem die Wände bestehen, elektrisch leitfähig ist.

25. Verfahren nach Anspruch 23 oder 24, in welchem die Wandschichten durch Siebabscheidung durch eine auf das Substrat ausgerichtete Schablone mit Öffnungen für das Hindurchtreten von anfangs flüssigem Material in einem Muster entsprechend dem entworfenen Muster der Flussfeldwände abgeschieden werden.

26. Verfahren nach einem der Ansprüche 23 bis 25, in welchem das anfangs flüssige Material eine viskose Flüssigkeit enthaltend leitfähige fein verteilte Partikel ist.

27. Verfahren nach Anspruch 26, in welchem die leitfähigen fein verteilten Partikel aus Kohlenstoff bestehen.

28. Verfahren nach einem der Ansprüche 23 bis 27, in welchem das anfangs flüssige Material Drucktinte ist.

29. Verfahren nach einem der Ansprüche 23 bis 27, in welchem das anfangs flüssige Material eine gießbare Graphitpaste ist.

30. Verfahren nach einem der Ansprüche 23 bis 29, im welchem das anfangs flüssige formbare Material einen flüssigen Trägeranteil einschließt, der während des Aushärtens verdampft, und in welchem das Aushärten durch Trocknung erfolgt.

31. Verfahren nach einem der Ansprüche 23 bis 30, im welchem das Aushärten durch Erhitzung erfolgt.

32. Verfahren nach einem der Ansprüche 23 bis 29, in welchem das Aushärten durch das Aussetzen gegenüber ultravioletter Strahlung erfolgt.

33. Verfahren nach einem der Ansprüche 23 bis 29, im welchem das Aushärten durch Sinterung erfolgt.

34. Verfahren nach einem der Ansprüche 23 bis 33, zusätzlich aufweisend das sequenzielle Abscheiden einer Reihe von Schichten aus ausgewählten Materialien zum Bilden von topografischen Elementen zusätzlich zu den Flussfeldwänden auf dem Substrat.

35. Verfahren nach Anspruch 34, in welchem das Abscheiden von Schichten zum Bilden der topografischen Elemente zusätzlich zu den Flussfeldwänden synchron mit der Abscheidung der Flussfeldwandschichten bewirkt wird.

36. Verfahren nach einem der Ansprüche 23 bis 35, in welchem aufeinanderfolgende Schichten aufgelegt werden bevor die vorhergehende Schicht vollständig ausgehärtet ist, wodurch die Bindung von aufeinanderfolgenden Schichten zu den vorhergehen Schichten verbessert wird und Lücken zwischen aufeinanderfolgenden Schichten vermieden werden.

37. Verfahren nach Anspruch 35, zusätzlich aufweisend das Binden der zuletzt abgeschiedenen Wandschicht an ein Stratum der Brennstoffzelle, bevor die zuletzt abgeschiedene Wandschicht vollständig ausgehärtet ist, wodurch eine sichere Bindung zwischen dem Stratum und den auf dem Substrat gebildeten Wänden gebildet und das Flussfeld geschützt wird.

38. Verfahren nach einem der Ansprüche 23 bis 37, in welchem die abgeschiedenen Schichten hinsichtlich ihrer physikalischen Eigenschaften nicht einheitlich sind.

39. Verfahren nach Anspruch 38, in welchem eine der Schichten der Flussfeldwände, wenn die Flussfeldplatte in einen Brennstoffzellenstapel eingebaut wird, benachbart ist zu einem benachbarten elektrochemisch aktiven Stratum, und in welchem diese Schicht aus einem Material besteht, das poröser ist als die anderen der Schichten der Flussfeldwände.

40. Verfahren nach einem der Ansprüche 23 bis 39, in welchem das Wandmuster so ausgewählt ist, dass Flusskanäle geschaffen werden, die von einem Ende zu ihrem anderen angeschrägt sind.

41. Verfahren nach einem der Ansprüche 23 bis 40, in welchem das Material, aus dem eine der ausgewählten Schichten besteht, ein Agens enthält, das bei Behandlung Porosität der ausgewählten Schicht induziert.

42. Verfahren nach einem der Ansprüche 23 bis 41, in welchem das anfangs flüssige formbare Material durch eine poröse Maschenform hindurch in eine Siebschablone gelangt, die gleichförmig auf das Substrat ausgerichtet ist für jede folgende Abscheidung von Schichten aus dem anfangs flüssigen formbaren Material, das die Form der Wände des Substrates bildet, wobei die poröse Maschenform kongruent mit dem entworfenen Muster der Flussfeldwände ist, wodurch das anfangs flüssige formbare Material veranlasst wird, mit dem gewünschten Muster der Flussfeldwände überein zu stimmen.

43. Verfahren nach einem der Ansprüche 23 bis 42 zur Herstellung einer Brennstoffzellenplatte vom PEM-Typ.

## Revendications

1. Plaque de champ d'écoulement pour une cellule à carburant comprenant un substrat et des parois mutuellement espacées, déposées sur le substrat sous la forme d'une série de couches initialement liquides pouvant être façonnées, qui se solidifient et se lient entre elles et au substrat, les parois constituant les limites de canaux d'écoulement d'un champ d'écoulement pour la plaque, lesdites parois et la surface de substrat adjacente définissant le champ d'écoulement.

2. Plaque de champ d'écoulement selon la revendication 1, dans laquelle le substrat est sensiblement plan.

3. Plaque de champ d'écoulement selon la revendication 1 ou 2, dans laquelle les parois présentent une hauteur sensiblement régulière au-dessus du substrat.

4. Plaque de champ d'écoulement selon la revendication 1, 2 ou 3, dans laquelle les canaux d'écoulement sont interconnectés afin de former, lorsque la plaque est installée dans une pile de cellules à carburant, un conduit de fluide entre la plaque et une surface adjacente en contact avec les surfaces distales précédemment exposées des parois qui referment les canaux d'écoulement afin de former le conduit de fluide.

5. Plaque de champ d'écoulement selon la revendication 4, dans laquelle la surface adjacente est une surface d'une zone électrochimiquement active de la cellule à carburant, et le conduit de fluide est un conduit de gaz de réaction.

6. Plaque de champ d'écoulement selon l'une quelconque des revendications précédentes, dans laquelle la surface du substrat reliant les parois est inerte aux gaz de réaction dans la cellule à carburant et non nocif pour la cellule à carburant.

7. Plaque de champ d'écoulement selon l'une quelconque des revendications précédentes, dans laquelle les couches initialement liquides déposées sont des encres ou pâtes visqueuses qui se solidifient lors du durcissement.

8. Plaque de champ d'écoulement selon l'une quelconque des revendications précédentes, dans laquelle les parois sont formées par sérigraphie.

9. Plaque de champ d'écoulement selon l'une quelconque des revendications précédentes, dans laquelle les parois sont réalisées en un premier matériau sélectionné à des premiers emplacements prédéterminés sur le substrat, et réalisées en un second matériau sélectionné à d'autres emplacements prédéterminés sur le substrat.

10. Plaque de champ d'écoulement selon la revendication 9, dans laquelle les premiers emplacements et les autres emplacements sont différenciés les uns par rapport aux autres dans un ou plusieurs plans parallèles au plan du substrat.

11. Plaque de champ d'écoulement selon la revendication 9, dans laquelle les premiers emplacements et les autres emplacements sont différenciés les uns par rapport aux autres dans un ou plusieurs plans perpendiculaires au plan du substrat.

12. Plaque de champ d'écoulement selon l'une quelconque des revendications 1 à 8, dans laquelle certaines parois sélectionnées desdites parois sont réalisées en un matériau conducteur et certaines autres parois desdites parois sont réalisées en un matériau non conducteur.

13. Plaque de champ d'écoulement selon l'une quelconque des revendications 1 à 8, dans laquelle les parois sont réalisées en un matériau conducteur.

14. Plaque de champ d'écoulement selon la revendication 13, dans laquelle le substrat est réalisé en un matériau électriquement conducteur.

15. Plaque de champ d'écoulement selon l'une quelconque des revendications précédentes, dans laquelle le substrat est mince et relativement rigide.

16. Plaque de champ d'écoulement selon l'une quelconque des revendications 1 à 8 et 12 à 15, dans laquelle les couches initialement liquides pouvant être façonnées contiennent de fines particules de carbone qui fusionnent et se solidifient en une masse solide afin de former les parois.

17. Plaque de champ d'écoulement selon l'une quelconque des revendications précédentes, dans laquelle le substrat est une plaque de séparation.

18. Plaque de champ d'écoulement selon l'une quelconque des revendications 1 à 4, dans laquelle le substrat est une couche intermédiaire électrochimiquement active de la cellule à carburant et les parois sont électriquement conductrices.

19. Plaque de champ d'écoulement selon l'une quelconque des revendications précédentes, dans laquelle les parois sont réalisées en un matériau inerte aux gaz de réaction dans la cellule à carburant et non nocif pour la cellule à carburant.

20. Plaque de champ d'écoulement selon l'une quelconque des revendications précédentes, dans laquelle une paire de profils de champ d'écoulement respectifs desdites parois, chaque dit profil étant associé à un gaz de réaction, sont déposés, chacun sur une face associée des deux faces du substrat.

21. Plaque de champ d'écoulement selon l'une quelconque des revendications précédentes, dans laquelle les canaux de champ d'écoulement sont évasés d'une extrémité à l'autre.

22. Plaque de champ d'écoulement selon l'une quelconque des revendications précédentes, destinée à être utilisée dans une pile de cellules à carburant du type PEM.

23. Procédé de réalisation d'une plaque de champ d'écoulement ou de parties de celle-ci pour une cellule à carburant comprenant:
(a) le dépôt sur un substrat d'une série de couches de quantités commandées d'un matériau initialement liquide pouvant être façonné suivant un profil se conformant à un profil défini de parois de champ d'écoulement, une telle couche initiale fusionnant et se soudant au substrat au cours du durcissement, chacune de telles couches déposées ultérieurement fusionnant et se soudant à une telle couche immédiatement précédente au cours du durcissement ; et
(b) le durcissement au moins partiel de chaque couche après son dépôt sur le substrat de manière à établir une stabilité dimensionnelle et une intégrité structurelle d'une telle couche avant le dépôt de la couche suivante ;
conduisant ainsi à la réalisation d'un profil de parois solide et de bonne cohésion sur le substrat, se conformant au profil de parois de champ d'écoulement défini.

24. Procédé selon la revendication 23, dans lequel le matériau avec lequel les parois sont réalisées est électriquement conducteur.

25. Procédé selon la revendication 23 ou 24, dans lequel les couches de paroi sont déposées par sérigraphie à travers un pochoir aligné avec le substrat et présentant à l'intérieur des ouvertures destinées à assurer le passage à travers du matériau initialement liquide suivant un profil se conformant au profil défini des parois de champ d'écoulement.

26. Procédé selon l'une quelconque des revendications 23 à 25, dans lequel le matériau initialement liquide est un liquide visqueux contenant des particules conductrices finement divisées.

27. Procédé selon la revendication 26, dans lequel les particules conductrices finement divisées sont en carbone.

28. Procédé selon l'une quelconque des revendications 23 à 27, dans lequel le matériau initialement liquide est de l'encre d'impression.

29. Procédé selon l'une quelconque des revendications 23 à 27, dans lequel le matériau initialement liquide est une pâte de graphite pouvant être moulée.

30. Procédé selon l'une quelconque des revendications 23 à 29, dans lequel le matériau initialement liquide pouvant être façonné comprend une partie support de liquide qui s'évapore au cours du durcissement et dans lequel le durcissement est assuré par séchage.

31. Procédé selon l'une quelconque des revendications 23 à 30, dans lequel le durcissement est assuré par chauffage.

32. Procédé selon l'une quelconque des revendications 23 à 29, dans lequel le durcissement est assuré par exposition à un rayonnement ultraviolet.

33. Procédé selon l'une quelconque des revendications 23 à 29, dans lequel le durcissement est effectué par frittage.

34. Procédé selon l'une quelconque des revendications 23 à 33, comprenant, en outre, le dépôt successif d'une série de couches de matériaux sélectionnés afin de former sur le substrat des éléments topographiques autres que des parois de champ d'écoulement.

35. Procédé selon la revendication 34, dans lequel les couches déposées afin de former des éléments topographiques autres que des parois de champ d'écoulement sont réalisées de manière synchronisée avec le dépôt de couches de paroi de champ d'écoulement.

36. Procédé selon l'une quelconque des revendications 23 à 35, dans lequel des couches successives sont appliquées avant que la couche précédente soit entièrement durcie, améliorant ainsi la liaison des couches successives sur les couches qu'elles suivent et évitant la formation d'interstices entre couches successives.

37. Procédé selon la revendication 35, comprenant, en outre, la liaison de la couche de paroi déposée en dernier à une couche intermédiaire de la cellule à carburant avant que la couche de paroi déposée en dernier soit complètement durcie, formant ainsi une liaison résistante entre la couche intermédiaire et les parois formées sur le substrat, et recouvrant ainsi le champ d'écoulement.

38. Procédé selon l'une quelconque des revendications 23 à 37, dans lequel les couches déposées ne sont pas uniformes en ce qui concerne certaines de leurs propriétés physiques sélectionnées.

39. Procédé selon la revendication 38, dans lequel l'une des couches des parois de champ d'écoulement, lorsque la plaque de champ d'écoulement est installée dans une pile de cellule à carburant, est placée à proximité d'une couche intermédiaire électrochimiquement active voisine, et dans lequel une telle couche est réalisée en un matériau plus poreux que lesdites autres couches des parois de champ d'écoulement.

40. Procédé selon l'une quelconque des revendications 23 à 39, dans lequel le profil de paroi est sélectionné afin de former des canaux d'écoulement qui sont évasés à partir d'une de leurs extrémités vers l'autre.

41. Procédé selon l'une quelconque des revendications 23 à 40, dans lequel le matériau avec lequel une couche sélectionnée desdites couches est réalisée comprend un agent qui provoque une certaine porosité d'une telle couche sélectionnée au cours du durcissement.

42. Procédé selon quelconque des revendications 23 à 41, dans lequel le matériau initialement liquide pouvant être façonné est passé à travers un profil en maille poreux dans un pochoir de sérigraphie aligné uniformément avec le substrat à chaque dépôt successif des couches de matériau initialement liquide pouvant être façonné formant le profil de parois sur le substrat, le profil en maille poreux coïncidant avec le profil défini des parois de champ d'écoulement, provoquant ainsi la conformation du matériau initialement liquide pouvant être façonné au profil défini des parois de champ d'écoulement.

43. Procédé selon l'une quelconque des revendications 23 à 42 destiné à la fabrication d'une plaque de cellule à carburant du type PEM.
